# EUROPEAN PATENT APPLICATION

(11) **EP 4 035 914 A1**
(43) Date of publication of application: **03.08.2022**
(21) Application number: 19947285.3
(22) Date of filing: 27.09.2019
(51) Int. Cl.: B60H 1/26

(54) **VEHICULAR AIR-CONDITIONING/VENTILATION DEVICE AND VEHICLE**

(71) Applicant: MITSUBISHI ELECTRIC CORPORATION, Chiyoda-ku Tokyo 100-8310 (JP)
(72) Inventor: MATSUURA, Fumikazu, Tokyo 100-8310 (JP)
(74) Representative: Witte, Weller & Partner Patentanwälte mbB
(86) International application number: PCT/JP2019/038353
(87) International publication number: WO 2021/059529

(57) **Abstract**

A vehicle air-conditioning ventilator (10) is a vehicle air-conditioning ventilator provided in a vehicle. The vehicle air-conditioning ventilator (10) includes: a supply air path connecting the outside of the vehicle which is the external of the vehicle and the inside of the vehicle which is the internal of the vehicle; an exhaust air path connecting the outside of the vehicle and the inside of the vehicle and intersecting with the supply air path; a first air supply blower that is provided in the supply air path and generates, in the supply air path, a supply air flow (56) toward the inside of the vehicle; and an exhaust air blower that is provided in the exhaust air path and generates, in the exhaust air path, an exhaust air flow (57) from the inside of the vehicle toward the outside of the vehicle. The vehicle air-conditioning ventilator (10) includes: a heat exchanger that performs heat exchange between the supply air flow (56) and the exhaust air flow (57); a storage battery (102) arranged at a position upstream of the heat exchanger in the exhaust air path and used for driving the vehicle; and an inside air merging path (23) merging with the supply air path at a position downstream of the heat exchanger and connecting the supply air path and the inside of the vehicle.

## Description

### Field

The present invention relates to a vehicle air-conditioning ventilator that performs air conditioning and ventilation of an electrically powered vehicle and a vehicle.

### Background

A vehicle is provided with a vehicle air-conditioning ventilator that performs: heating, cooling, and ventilation of the inside of the vehicle. For example, when performing heating of the inside of the vehicle, circulation heating in which inside air which is air inside the vehicle is heated and circulated in the vehicle, and outside air introduction heating in which outside air which is air outside the vehicle is heated and introduced into the vehicle are performed.

Patent Literature 1 discloses an air conditioner for an electric vehicle that performs air conditioning in a cabin by an air-conditioning means using heat capacity itself of existing batteries of the electric vehicle. In the air conditioner for an electric vehicle of Patent Literature 1, air inside a vehicle sucked from an inside air suction port provided inside the vehicle is warmed by heat generated by the batteries, is further temperature-controlled by an indoor heat exchanger, and is returned to the inside of the vehicle.

However, in the air conditioner for an electric vehicle of Patent Literature 1, air warmed by heat generated by the batteries is returned to the inside of the vehicle. Therefore, when gas is generated due to a failure of the batteries, the generated gas is also exhausted to the inside of the vehicle where an occupant is present, and air pollution in the vehicle occurs.

Patent Literature 2 discloses, as an automotive air conditioner that solves the above problem, an automotive air conditioner that passes air warmed by heat exchange with a battery through a heat exchanger, and then exhausts the air to the outside of a cabin. In the automotive air conditioner of Patent Literature 2, it is possible to perform heat exchange between inside air to be returned to the inside of the vehicle as a supply air flow and inside air from the cabin warmed by heat exchange with the battery, thereby improving heating capacity of air conditioning, and even if gas is generated due to an anomaly of the battery, the gas can be prevented from flowing into the cabin.

### Citation List

### Patent Literature

Patent Literature 1: Japanese Patent Application Laid-open No. H5-178070
Patent Literature 2: Japanese Patent No. 5588472

### Summary

### Technical Problem

However, in the automotive air conditioner of Patent Literature 2 described above, in order to prevent heat exchange between inside air to be returned to the inside of the vehicle as a supply air flow and inside air from the cabin warmed by heat exchange with the battery during a cooling operation in summer, two paths are required for exhaust hoses that exhaust the inside air from the cabin warmed by the heat exchange with the battery to the outside of the vehicle, and thus the structure becomes complicated, which is a problem.

The present invention has been made in view of the above, and an object thereof is to provide a vehicle air-conditioning ventilator that, even if gas is generated due to an anomaly of a storage battery, can prevent the gas from flowing to the inside of a vehicle, while improving heating performance in air conditioning of the inside of the vehicle using exhaust heat from the storage battery, and preventing a decrease in a load in a cooling operation in air conditioning of the inside of the vehicle due to exhaust heat from the storage battery, with a simple structure thereof.

### Solution to Problem

In order to solve the above-described problem and achieve the object, the vehicle air-conditioning ventilator according to the present invention is a vehicle air-conditioning ventilator provided in a vehicle. The vehicle air-conditioning ventilator includes: a supply air path connecting the outside of the vehicle which is the external of the vehicle and the inside of the vehicle which is the internal of the vehicle; an exhaust air path connecting the outside of the vehicle and the inside of the vehicle and intersecting with the supply air path; a first air supply blower that is provided in the supply air path and generates, in the supply air path, a supply air flow toward the inside of the vehicle; and an exhaust air blower that is provided in the exhaust air path and generates, in the exhaust air path, an exhaust air flow from the inside of the vehicle toward the outside of the vehicle. The vehicle air-conditioning ventilator includes: a heat exchanger that performs heat exchange between the supply air flow and the exhaust air flow; a storage battery arranged at a position upstream of the heat exchanger in the exhaust air path and used for driving the vehicle; and an inside air merging path merging with the supply air path at a position downstream of the heat exchanger and connecting the supply air path and the inside of the vehicle.

### Advantageous Effects of Invention

The vehicle air-conditioning ventilator according to the present invention achieves an effect that, even if gas is generated due to an anomaly of a storage battery, the vehicle air-conditioning ventilator can prevent the gas from flowing to the inside of a vehicle, while improving heating performance in air conditioning of the inside of the vehicle using exhaust heat from the storage battery, and preventing a decrease in a load in a cooling operation in air conditioning of the inside of the vehicle due to exhaust heat from the storage battery, with a simple structure thereof.

### Brief Description of Drawings

FIG. 1 is a diagram illustrating a schematic configuration of an electrically powered vehicle including a vehicle air-conditioning ventilator according to a first embodiment of the present invention.
FIG. 2 is a diagram illustrating flows of exhausted inside air and circulated inside air in the vehicle air-conditioning ventilator according to the first embodiment of the present invention.
FIG. 3 is a diagram illustrating a detailed configuration of a main body unit of the vehicle air-conditioning ventilator according to the first embodiment of the present invention.
FIG. 4 is a perspective view of a heat recovery heat exchanger in the first embodiment of the present invention.
FIG. 5 is a diagram illustrating a schematic configuration of a vehicle air-conditioning ventilator according to a second embodiment of the present invention.
FIG. 6 is a diagram illustrating a schematic configuration of a vehicle air-conditioning ventilator according to a third embodiment of the present invention.
FIG. 7 is a diagram illustrating a schematic configuration of another vehicle air-conditioning ventilator according to the third embodiment of the present invention.
FIG. 8 is a diagram illustrating a schematic arrangement of main parts of vehicle air-conditioning ventilators in an electrically powered vehicle according to a fourth embodiment of the present invention.
FIG. 9 is a diagram illustrating a schematic arrangement of the vehicle air-conditioning ventilators in the electrically powered vehicle according to the fourth embodiment of the present invention, and is a layout plan as viewed from a top-surface side of the electrically powered vehicle.
FIG. 10 is a block diagram illustrating a control unit and the like illustrated in FIG. 1.
FIG. 11 is a diagram illustrating a hardware configuration of the control unit illustrated in FIG. 1.

### Description of Embodiments

Hereinafter, a vehicle air-conditioning ventilator and a vehicle according to each embodiment of the present invention will be described in detail with reference to the drawings. Note that the present invention is not limited to the embodiments.

### First Embodiment.

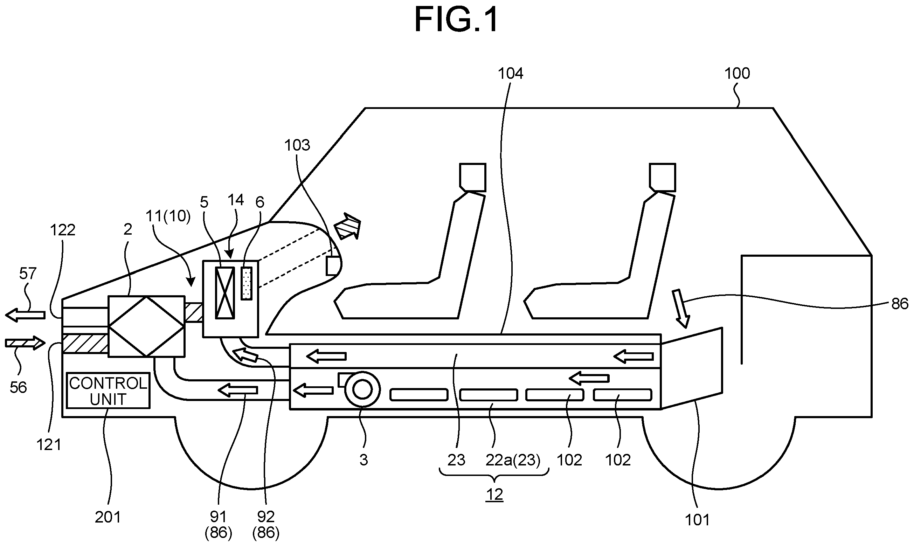

FIG. 1 is a diagram illustrating a schematic configuration of an electrically powered vehicle 100 including a vehicle air-conditioning ventilator 10 according to a first embodiment of the present invention. The electrically powered vehicle 100 is, for example, a hybrid vehicle such as a plug-in hybrid car, or an electric vehicle. The electrically powered vehicle 100 is driven by using, as power source, power stored in storage batteries 102 arranged in an underfloor region below a floor surface 104 in the inside of the vehicle. The electrically powered vehicle 100 includes the vehicle air-conditioning ventilator 10 that performs heating, cooling, and ventilation of the inside of the vehicle. The vehicle air-conditioning ventilator 10 includes a main body unit 11 and an inside air path 12.

On a floor surface below a back seat in the electrically powered vehicle 100, an air inlet port 101 is provided which is an opening opened to the inside of the vehicle for taking inside air 86 which is air inside the vehicle into the inside air path 12.

The main body unit 11 performs air conditioning of air to be supplied to the inside of the vehicle to perform heating, cooling, and ventilation of the inside of the vehicle. The main body unit 11 is arranged forward of the driver's seat in the electrically powered vehicle 100.

The inside air path 12 is a path for transporting the inside air 86, which is air inside the vehicle taken in from the air inlet port 101, to the main body unit 11. In the electrically powered vehicle 100, the inside air path 12 is arranged in the underfloor region below the floor surface 104 in the inside of the vehicle. The inside air path 12 includes an inside air merging path 23 and an inside air exhaust path 22a, which are two paths for separating the inside air 86 taken in from the air inlet port 101 into the inside air 86 to be used as cooling air for cooling the storage batteries 102 and exhausted to the outside of the vehicle and the inside air 86 to be circulated in the vehicle, and transporting the inside air 86 thus separated.

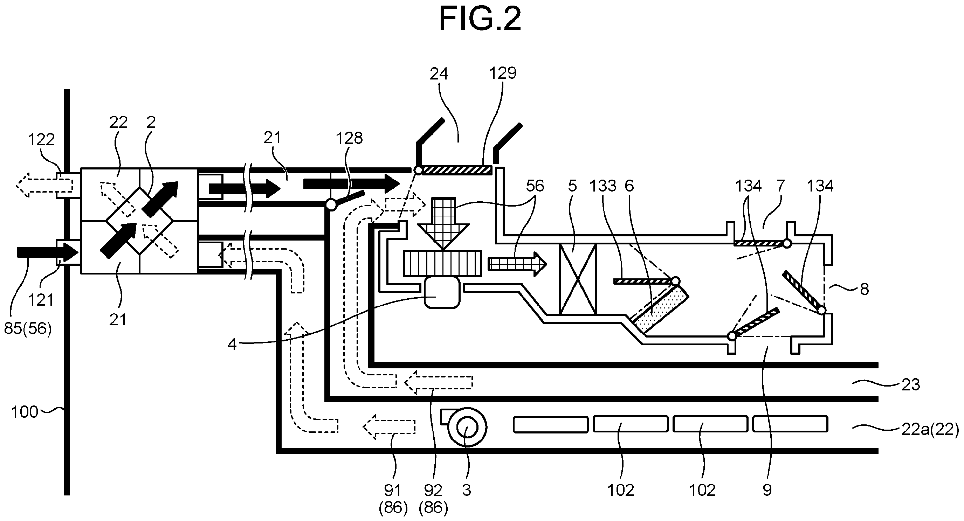

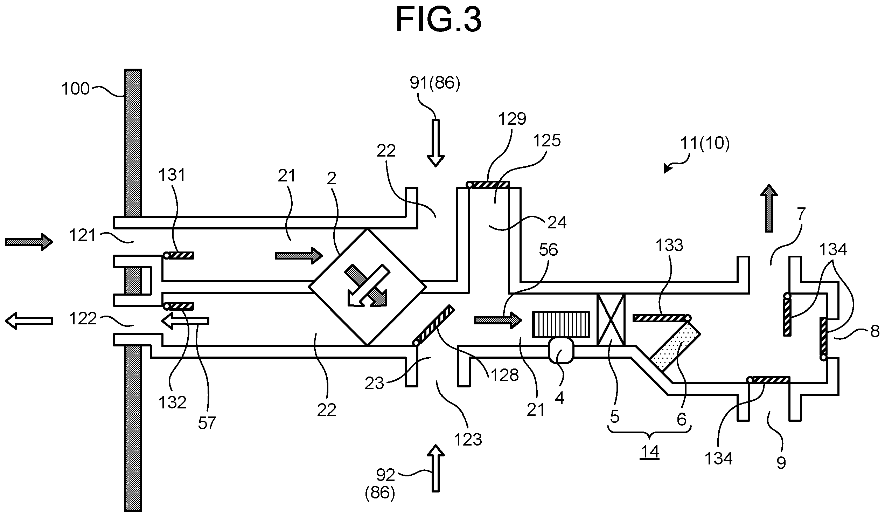

First, a configuration of the vehicle air-conditioning ventilator 10 will be described. FIG. 2 is a diagram illustrating flows of exhaust inside air 91 and circulating inside air 92 in the vehicle air-conditioning ventilator 10 according to the first embodiment of the present invention. FIG. 2 detailedly illustrates flows of the exhaust inside air 91 and the circulating inside air 92 in a state where the vehicle air-conditioning ventilator 10 is operated in an inside/outside air mixing mode. FIG. 3 is a diagram illustrating a detailed configuration of the main body unit 11 of the vehicle air-conditioning ventilator 10 according to the first embodiment of the present invention. FIG. 3 illustrates the state where the vehicle air-conditioning ventilator 10 is operated in the inside/outside air mixing mode. The vehicle air-conditioning ventilator 10 includes a supply air path 21 and an exhaust air path 22.

The supply air path 21 is a path that connects: a defroster outlet port 7, a face outlet port 8, and a foot outlet port 9 which are openings opened to the inside of the vehicle; and an air supply vehicle exterior opening 121 which is an opening opened to the outside of the vehicle for taking in outside air 85 which is fresh air. That is, the supply air path 21 communicates the outside of the vehicle which is the external of the electrically powered vehicle 100 with the inside of the vehicle which is the internal of the electrically powered vehicle 100. Air is blown out from the defroster outlet port 7 toward the windshield. Air is blown out from the face outlet port 8 toward the upper body of an occupant. Air is blown out from the foot outlet port 9 toward the feet of the occupant.

The exhaust air path 22 is a path that connects the air inlet port 101 which is an opening opened to the inside of the vehicle and an air exhaust vehicle exterior opening 122 which is an opening opened to the outside of the vehicle via a heat recovery heat exchanger 2 to be described later. That is, the exhaust air path 22 communicates the outside of the vehicle with the inside of the vehicle. The exhaust air path 22 is a path for transporting part of the inside air 86 taken in from the air inlet port 101 to the outside of the vehicle as the exhaust inside air 91. The supply air path 21 and the exhaust air path 22 intersect with each other in the middle of the paths.

A part of a portion of the exhaust air path 22 on a side of the air inlet port 101 in a region upstream of the heat recovery heat exchanger 2 is an inside air exhaust path 22a arranged in the underfloor region below the floor surface 104 in the inside of the vehicle. The inside air exhaust path 22a is a path for transporting part of the inside air 86 taken in from the air inlet port 101 toward the heat recovery heat exchanger 2 as the exhaust inside air 91.

A plurality of storage batteries 102 used for driving the electrically powered vehicle 100 are arranged in the inside air exhaust path 22a which constitute part of the exhaust air path 22. Note that the number of storage batteries 102 arranged in the inside air exhaust path 22a is not limited.

The exhaust inside air 91 which is the inside air 86 taken in from the air inlet port 101 and flowing through the inside air exhaust path 22a passes around the storage batteries 102 and comes into contact with the storage batteries 102, and thereby the exhaust inside air 91 cools down the storage batteries 102 that have generated heat during use, and is warmed. That is, the exhaust inside air 91 taken in from the air inlet port 101 and flowing through the inside air exhaust path 22a is used as cooling air for cooling the storage batteries 102 arranged in the inside air exhaust path 22a, and a temperature of the exhaust inside air 91 increases. The exhaust inside air 91 whose temperature has increased by cooling the storage batteries 102 flows toward the heat recovery heat exchanger 2.

As a result, it is possible for the vehicle air-conditioning ventilator 10: to cool the storage batteries 102, which have generated heat, using the inside air 86 to be exhausted to the outside of the vehicle; and to exhaust heat generated by the storage batteries 102 to the outside of the vehicle.

In addition, a cooling blower 3 that generates a flow of the inside air 86 as cooling air is arranged in the inside air exhaust path 22a. The cooling blower 3: generates a flow of the exhaust inside air 91 as cooling air that flows from the air inlet port 101 toward the heat recovery heat exchanger 2; and functions as a first exhaust air blower that generates, in the exhaust air path 22, an exhaust air flow 57 that flows from the air inlet port 101 toward the air exhaust vehicle exterior opening 122 described later.

The vehicle air-conditioning ventilator 10 includes a first air supply blower 4. The first air supply blower 4 is provided in the supply air path 21. The first air supply blower 4 generates, in the supply air path 21, a supply air flow 56 that flows toward the defroster outlet port 7, the face outlet port 8, and the foot outlet port 9. The first air supply blower 4 is provided at a position downstream of an intersection where the supply air path 21 and the exhaust air path 22 intersect with each other in a flow direction of the supply air flow 56.

The vehicle air-conditioning ventilator 10 includes the heat recovery heat exchanger 2. The heat recovery heat exchanger 2 is provided at the intersection where the supply air path 21 and the exhaust air path 22 intersect with each other. The heat recovery heat exchanger 2 is a heat exchanger that performs heat exchange between the supply air flow 56 flowing through the supply air path 21 and the exhaust air flow 57 flowing through the exhaust air path 22.

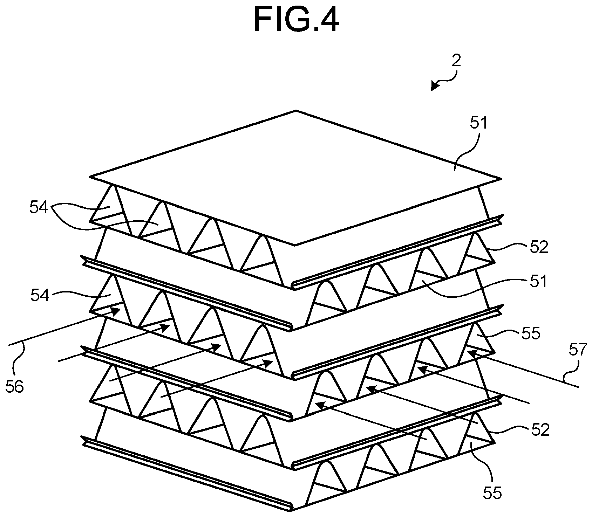

FIG. 4 is a perspective view of the heat recovery heat exchanger 2 in the first embodiment of the present invention. The heat recovery heat exchanger 2 includes partition members 51 and spacing members 52 alternately stacked. The partition members 51 and the spacing members 52 are bonded with an adhesive. On one side across each partition member 51, a first laminar gas flow path 54 which is a flow path of the outside air 85 as the supply air flow 56 is formed. The first laminar gas flow path 54 constitutes a part of the supply air path 21. On the other side across each partition member 51, a second laminar gas flow path 55 which is a flow path of the inside air as the exhaust air flow 57 is formed. The second laminar gas flow path 55 constitutes a part of the exhaust air path 22. An extending direction of the first laminar gas flow path 54 and an extending direction of the second laminar gas flow path 55 are orthogonal to each other.

In a case where the heat recovery heat exchanger 2 is constituted with a material for sensible heat exchange that is impermeable to humidity and exchanges only temperature, only sensible heat is exchanged between the supply air flow 56 and the exhaust air flow 57 using each partition member 51 as a medium. As the material for sensible heat exchange, for example, plastic is used. In a case where exhaust of humidity is regarded as important in air conditioning and ventilation of the inside of the vehicle, it is preferable to use the heat recovery heat exchanger 2 in which only sensible heat is exchanged.

In addition, by imparting a deodorizing function to a material constituting the heat recovery heat exchanger 2, a deodorizing effect in an air environment in the vehicle can be expected when performing heat exchange between the outside air and the inside air, and an on-vehicle environment can be improved. Furthermore, by arranging a high-performance filter such as a high efficiency particlate air filter (HEPA) at a position upstream of the heat recovery heat exchanger 2, it is possible to suppress entry of fine particulate matter such as particulate matter (PM) 2.5 and fine particles such as pollen to inside of the vehicle, and to enhance an air cleaning effect in the vehicle.

The vehicle air-conditioning ventilator 10 includes an air-conditioning unit 14 including a cooler 5 and a heater 6. The cooler 5 is provided in the supply air path 21 and performs air conditioning of the supply air flow 56 flowing in the vehicle. The cooler 5 is provided at a position downstream of the first air supply blower 4 in the flow direction of the supply air flow 56. The cooler 5 cools down the supply air flow 56 to a dew-point temperature or lower. When the supply air flow 56 is cooled to the dew-point temperature or lower by the cooler 5, dew condensation occurs and the humidity decreases. That is, the supply air flow 56 can be dehumidified by the cooler 5. The heater 6 is provided in the supply air path 21. The heater 6 is provided at a position downstream of the cooler 5 in the flow direction of the supply air flow 56. The heater 6 heats the supply air flow 56.

For example, the cooler 5 and the heater 6 can be configured using a heat pump system. In that case, the cooler 5 is an evaporator that evaporates a refrigerant by heat absorption. The heater 6 is a condenser that condenses the refrigerant by heat radiation. Note that the heater 6 may be an electric heater such as a positive temperature coefficient (PTC) heater or a condenser using the electric heater as an auxiliary heat source.

The vehicle air-conditioning ventilator 10 includes the inside air merging path 23. The inside air merging path 23 is an air path that merges with the supply air path 21. The inside air merging path 23 merges with the supply air path 21 at a position downstream of the heat recovery heat exchanger 2 and upstream of the first air supply blower 4 in the flow of the supply air flow 56. In the inside air merging path 23, an end portion opposite to an end portion that merges with the supply air path 21 is the air inlet port 101 which is an opening opened to the inside of the vehicle.

The inside air merging path 23 connects the air inlet port 101 which is an opening opened to the inside of the vehicle and the supply air path 21 to connect the supply air path 21 and the inside of the vehicle, and the inside air 86 is introduced into the inside air merging path 23 from the inside of the vehicle. That is, the inside air merging path 23 communicates the supply air path 21 with the inside of the vehicle. Through the inside air merging path 23, part of the inside air 86 taken in from the air inlet port 101 is transported to the supply air path 21 as the circulating inside air 92 to be circulated in the vehicle without contacting the storage batteries 102. The circulating inside air 92 is the inside air 86 which is taken in from the air inlet port 101 and then circulated again in the vehicle.

Regarding the arrangement of the inside air exhaust path 22a and the inside air merging path 23, the inside air exhaust path 22a, the inside air merging path 23, the floor surface 104 in the inside of the vehicle, and the inside of the vehicle are arranged in this order in the electrically powered vehicle 100 from bottom thereof in an up-down direction, that is, in a vertical direction. In addition, the inside air exhaust path 22a and the inside air merging path 23 are arranged in parallel in an overlapping state in a plane direction of the floor surface 104 in the inside of the vehicle. That is, the inside air merging path 23 is interposed between the inside air exhaust path 22a and the inside of the vehicle. As a result, since the inside air merging path 23 is disposed between the inside air exhaust path 22a in which the storage batteries 102 are arranged and the inside of the vehicle, heat generated by the storage batteries 102 is not directly transferred to the inside of the vehicle by heat conduction. The storage batteries 102 are cooled by the inside air 86 flowing inside the inside air merging path 23. As a result, it is possible to suppress an increase in temperature in the vehicle caused by heat generated by the storage batteries 102.

The inside air exhaust path 22a and the inside air merging path 23 are constituted with ducts. In order to further ensure the above effect, it is preferable that the duct constituting the inside air exhaust path 22a be constituted with a heat-insulating material or that a heat-insulating material be provided on a side of the inside air merging path 23. Furthermore, it is preferable that the inside air merging path 23 be also constituted with a heat-insulating material, or that the heat-insulating material be provided on a side of the inside air exhaust path 22a.

The vehicle air-conditioning ventilator 10 includes an outside air merging path 24. The outside air merging path 24 is a path that merges with the supply air path 21. The outside air merging path 24 merges with the supply air path 21 at a position downstream of the heat recovery heat exchanger 2 and upstream of the first air supply blower 4 in the flow of the supply air flow 56. In the outside air merging path 24, an end portion opposite to an end portion that merges with the supply air path 21 is a merging vehicle exterior opening 125 which is an opening opened to the outside of the vehicle. The merging vehicle exterior opening 125 is an opening opened to the outside of the vehicle different from the above-described air supply vehicle exterior opening 121. That is, the vehicle air-conditioning ventilator 10 includes two openings which are opened to the outside of the vehicle and through which outside air can be introduced. The outside air merging path 24 connects the supply air path 21 and the outside of the vehicle, and outside air is introduced into the outside air merging path 24 from the outside of the vehicle. That is, the outside air merging path 24 communicates the supply air path 21 with the outside of the vehicle.

The vehicle air-conditioning ventilator 10 includes a first opening adjustment unit 128 that adjusts an opening degree of the inside air merging path 23. The first opening adjustment unit 128 is provided at a merging portion of the inside air merging path 23 and the supply air path 21. The first opening adjustment unit 128 also functions as a third opening adjustment unit that blocks the supply air path 21 at upstream of the merging portion while opening the inside air merging path 23. By blocking the supply air path 21, it is possible to perform air conditioning of the inside of the vehicle only by circulating the inside air 86.

The vehicle air-conditioning ventilator 10 includes a second opening adjustment unit 129 that adjusts an opening degree of the outside air merging path 24. The second opening adjustment unit 129 is provided at a portion of the merging vehicle exterior opening 125.

The air supply vehicle exterior opening 121 includes an air supply opening/closing unit 131 that opens and closes the air supply vehicle exterior opening 121. The air exhaust vehicle exterior opening 122 includes an air exhaust opening/closing unit 132 that opens and closes the air exhaust vehicle exterior opening 122.

The supply air path 21 includes a flow rate adjustment unit 133 that adjusts a proportion of the supply air flow 56 passing through the heater 6 in the supply air flow 56 passing through the supply air path 21. The defroster outlet port 7 includes a blow-out amount adjustment unit 134 that adjusts an opening degree of the defroster outlet port 7. Similarly, the face outlet port 8 includes the blow-out amount adjustment unit 134 that adjusts an opening degree of the face outlet port 8. Similarly, the foot outlet port 9 includes the blow-out amount adjustment unit 134 that adjusts an opening degree of the foot outlet port 9.

Returning to FIG. 1, the vehicle air-conditioning ventilator 10 includes a control unit 201. The control unit 201 controls various components of the above-described vehicle air-conditioning ventilator 10 to cause the vehicle air-conditioning ventilator 10 to perform air conditioning and ventilation of the inside of the vehicle. The type of air conditioning and ventilation performed under the control of the control unit 201 includes four types of modes with different air flows. Specifically, there are an inside/outside air mixing mode, an outside air mode, an inside air mode, and an outside air heat exchange mode. Details of each mode will be described below.

The vehicle air-conditioning ventilator 10 configured as described above can perform a heating operation as air conditioning of the inside of the vehicle in the inside/outside air mode. FIG. 3 illustrates a state of the first opening adjustment unit 128 and the like in the inside/outside air mode.

In the inside/outside air mixing mode, the control unit 201 controls the first opening adjustment unit 128 to arrange the first opening adjustment unit 128 at a position where the inside air merging path 23 is opened thereby. At that time, the first opening adjustment unit 128 is arranged at a position where the supply air path 21 is not blocked thereby. In addition, the control unit 201 controls the second opening adjustment unit 129 to arrange the second opening adjustment unit 129 at a position where the outside air merging path 24 is blocked thereby.

In addition, the control unit 201 controls the air supply opening/closing unit 131 to arrange the air supply opening/closing unit 131 at a position where the air supply vehicle exterior opening 121 is opened thereby. Furthermore, the control unit 201 controls the air exhaust opening/closing unit 132 to arrange the air exhaust opening/closing unit 132 at a position where the air exhaust vehicle exterior opening 122 is opened thereby.

Moreover, the control unit 201 controls the flow rate adjustment unit 133 to arrange the flow rate adjustment unit 133 at a position where part of the supply air flow 56 that has passed through the cooler 5 is guided to the heater 6 thereby. A temperature of air blown to the inside of the vehicle can be adjusted by the flow rate adjustment unit 133 adjusting the proportion of the air passing through the heater 6 in the supply air flow 56.

In addition, the control unit 201 controls the blow-out amount adjustment units 134 on the basis of an operation to an operation unit 103 provided in the vehicle illustrated in FIG. 1 to control the blow-out amount of the supply air flow 56 from each of the defroster outlet port 7, the face outlet port 8, and the foot outlet port 9. The air blown out from the defroster outlet port 7 is blown against the windshield. By blowing out the supply air flow 56 heated by heater 6 from the defroster outlet port 7, it is possible to heat the windshield to remove frost adhering to the windshield. The air blown out from the foot outlet port 9 is blown out to the vicinity of the feet of the occupant of the electrically powered vehicle 100. The air blown out from the face outlet port 8 is blown out to the vicinity of the face of the occupant of the electrically powered vehicle 100. Note that the blow-out amount adjustment units 134 provided at the foot outlet port 9 and the face outlet port 8 may be manually operated by the occupant.

In addition, the control unit 201 drives the cooling blower 3 and the first air supply blower 4.

In the inside/outside air mixing mode described above, the inside air 86 which is air inside the vehicle is taken into the exhaust air path 22 from the air inlet port 101 and is exhausted to the outside of the vehicle as the exhaust air flow 57 from the air exhaust vehicle exterior opening 122. Here, when flowing through the inside air exhaust path 22a, the exhaust inside air 91 which is the inside air 86 taken in from the air inlet port 101 and flowing through the inside air exhaust path 22a cools down the storage batteries 102 that have generated heat during use of the storage batteries 102, and the exhaust inside air 91 is warmed. The exhaust inside air 91 whose temperature has increased by cooling the storage batteries 102 flows toward the heat recovery heat exchanger 2. The exhaust inside air 91 passing through the exhaust air path 22 passes through the heat recovery heat exchanger 2.

In addition, air outside the vehicle is taken into the supply air path 21 from the air supply vehicle exterior opening 121, and is blown to the inside of the vehicle from the defroster outlet port 7, the face outlet port 8, and the foot outlet port 9 as the supply air flow 56. The supply air flow 56 passing through the supply air path 21 passes through the heat recovery heat exchanger 2. Consequently, in the inside/outside air mixing mode, heat exchange is performed between the supply air flow 56 and the exhaust air flow 57, and it is possible to reduce an air-conditioning load when the supply air flow 56 is warmed in the heating operation.

The circulating inside air 92 flowing into the supply air path 21 via the inside air merging path 23 is mixed into the supply air flow 56. The circulating inside air 92 mixed into the supply air flow 56 is blown to the inside of the vehicle from the defroster outlet port 7, the face outlet port 8, and the foot outlet port 9.

In the inside/outside air mixing mode, both of heat exchange ventilation in which heat exchange is performed between the exhaust inside air 91 as the exhaust air flow 57 and the outside air 85 as the supply air flow 56, and air circulation in which the circulating inside air 92 as the inside air 86 is circulated are performed at the same time.

Furthermore, in the inside/outside air mixing mode, air inside the vehicle warmed by heating is mixed into the supply air flow 56 blown to the inside of the vehicle, so that the air-conditioning load can be reduced as compared with a case of performing heating by taking in outside air only. That is, in the inside/outside air mixing mode, the air-conditioning load can be reduced by merging the circulating inside air 92 with the supply air flow 56 in addition to the heat exchange between the outside air and the inside air. As a result, it is possible to reduce the power consumption in the heater 6 in the heating operation, and to suppress a decrease in a cruising distance of the electrically powered vehicle 100 in winter.

In addition, when heating of the supply air flow 56 by the heater 6 is stopped, a cooling operation can be performed in which cool air cooled by the cooler 5 is blown to the inside of the vehicle.

In addition, in the outside air mode, the control unit 201 controls the first opening adjustment unit 128 to arrange the first opening adjustment unit 128 at a position where the inside air merging path 23 is closed thereby. In addition, the control unit 201 controls the second opening adjustment unit 129 to arrange the second opening adjustment unit 129 at a position where the exhaust air path 22 is blocked thereby. At that time, the merging vehicle exterior opening 125 is open.

In addition, the control unit 201 controls the air supply opening/closing unit 131 to arrange the air supply opening/closing unit 131 at a position where the air supply vehicle exterior opening 121 is closed thereby. Furthermore, the control unit 201 controls the air exhaust opening/closing unit 132 to arrange the air exhaust opening/closing unit 132 at a position where the air exhaust vehicle exterior opening 122 is closed thereby.

Moreover, the control unit 201 drives the first air supply blower 4, and stops the cooling blower 3.

In the outside air mode, the supply air flow 56 and the exhaust air flow 57 do not pass through the heat recovery heat exchanger 2, and heat exchange is not performed between the supply air flow 56 and the exhaust air flow 57. In addition, since the inside air merging path 23 is also closed, the inside air 86 is not mixed into the supply air flow 56. The supply air flow 56 includes only the outside air taken in from the outside air merging path 24. That is, in the outside air mode, air conditioning and ventilation are performed only by taking in the outside air.

In addition, in the inside air mode, the control unit 201 controls the first opening adjustment unit 128 to arrange the first opening adjustment unit 128 at a position where the supply air path 21 is closed thereby. In addition, the control unit 201 controls the air supply opening/closing unit 131 to arrange the air supply opening/closing unit 131 at a position where the air supply vehicle exterior opening 121 is closed thereby. Furthermore, the control unit 201 controls the air exhaust opening/closing unit 132 to arrange the air exhaust opening/closing unit 132 at a position where the air exhaust vehicle exterior opening 122 is closed thereby.

Moreover, the control unit 201 drives the first air supply blower 4, and stops the cooling blower 3.

In the inside air mode, the supply air flow 56 and the exhaust air flow 57 do not pass through the heat recovery heat exchanger 2, and heat exchange is not performed between the supply air flow 56 and the exhaust air flow 57. In addition, the outside air merging path 24 is also closed, and thus the outside air is not mixed into the supply air flow 56. The supply air flow 56 includes only the inside air 86 taken in from the inside air merging path 23. That is, in the inside air mode, air conditioning and ventilation are performed only by circulation of the inside air. Therefore, in the inside air mode, the air can be heated, cooled, and dehumidified, but it is difficult to reduce a carbon dioxide concentration in the vehicle as in the case of taking in the outside air.

In the outside air heat exchange mode, the control unit 201 controls the first opening adjustment unit 128 to arrange the first opening adjustment unit 128 at a position where the inside air merging path 23 is closed thereby. In addition, the control unit 201 drives the first air supply blower 4 and the cooling blower 3.

In the outside air heat exchange mode, the inside air 86 and the outside air are not mixed into the supply air flow 56 after passing through the heat recovery heat exchanger 2. Consequently, in the outside air heat exchange mode, the air-conditioning load during the heating operation is reduced by the heat exchange in the heat recovery heat exchanger 2.

Note that the control unit 201 can be, for example, a control board on which both a processor such as a central processing unit (CPU) and a storage element such as a memory are installed. By the processor executing an arithmetic process in accordance with a program stored in the storage element, the control of an operation of each mechanism described above is executed.

The vehicle air-conditioning ventilator 10 described above includes the inside air merging path 23 that merges with the supply air path 21 at a position downstream of the heat recovery heat exchanger 2 and connects the supply air path 21 and the inside of the vehicle, so that the inside air 86 can be returned to the inside of the vehicle without performing heat exchange by the heat recovery heat exchanger 2. There is only one path of the exhaust air path 22 that connects the outside of the vehicle and the inside of the vehicle and intersects with the supply air path 21. Therefore, there is no need to provide more than one exhaust air path 22 in order to prevent heat exchange between the exhaust inside air 91 whose temperature has increased by cooling the storage batteries 102 and the circulating inside air 92 during the cooling operation in summer.

Consequently, the vehicle air-conditioning ventilator 10 can improve the heating performance in the air conditioning of the inside of the vehicle using the exhaust heat from the storage batteries 102, and can prevent a decrease in a load in the cooling operation in the air conditioning of the inside of the vehicle due to the exhaust heat from the storage batteries 102, with a simple structure thereof.

In addition, in the vehicle air-conditioning ventilator 10, even if gas is generated due to an anomaly of the storage batteries 102, the inside air 86 passing through the exhaust air path 22 in which the storage batteries 102 are arranged is not returned to the inside of the vehicle, so that the gas can be prevented from flowing to the inside of the vehicle.

In addition, the vehicle air-conditioning ventilator 10 described above includes the first opening adjustment unit 128 that adjusts the opening degree of the inside air merging path 23. That is, the first opening adjustment unit 128 is arranged at a position downstream of the heat recovery heat exchanger 2 in the supply air path 21. As a result, the vehicle air-conditioning ventilator 10 more easily adjusts the flow rate of the circulating inside air 92 flowing from the inside air merging path 23 to the supply air path 21, and can finely control the mixing ratio of the circulating inside air 92 in the supply air flow 56.

In addition, in the vehicle air-conditioning ventilator 10 described above, the first air supply blower 4 is provided at a position downstream of a junction with the inside air merging path 23 in the supply air path 21. As a result, it is possible to smoothly and reliably generate the flow of the circulating inside air 92 flowing from the inside air merging path 23 to the supply air path 21, and to cause the supply air flow 56 to smoothly flow in the supply air path 21.

In addition, the vehicle air-conditioning ventilator 10 described above includes the outside air merging path 24 that merges with the supply air path 21 at a position downstream of the heat recovery heat exchanger 2 and connects the supply air path 21 and the outside of the vehicle. That is, the vehicle air-conditioning ventilator 10 includes the air supply vehicle exterior opening 121 and the merging vehicle exterior opening 125 as intake ports for outside air which is fresh air. As a result, the vehicle air-conditioning ventilator 10 can supply, as the supply air flow 56, the outside air that does not pass through the heat recovery heat exchanger 2 to the inside of the vehicle.

That is, the vehicle air-conditioning ventilator 10 can mix the outside air that has not undergone sensible heat exchange with the exhaust air flow 57 into the supply air flow 56 that has undergone sensible heat exchange with the exhaust air flow 57 in the heat recovery heat exchanger 2, can adjust the temperature of the supply air flow 56 flowing to the cooler 5, and can reduce a thermal load in the air conditioning of the inside of the vehicle. That is, into the supply air flow 56 that has undergone sensible heat exchange with the exhaust air flow 57 in the heat recovery heat exchanger 2, outside air having a temperature lower than that of the supply air flow 56 that has undergone sensible heat exchange can be mixed, and the temperature of the supply air flow 56 can be reduced.

In addition, the vehicle air-conditioning ventilator 10 described above includes the second opening adjustment unit 129 that adjusts the opening degree of the outside air merging path 24 separately from the first opening adjustment unit 128. That is, the second opening adjustment unit 129 is provided independently of the first opening adjustment unit 128 at a position downstream of the heat recovery heat exchanger 2 in the supply air path 21. As a result, the vehicle air-conditioning ventilator 10 more easily adjusts the flow rate of the outside air flowing from the outside air merging path 24 to the supply air path 21, and can finely control the mixing ratio of the outside air flowing from the outside air merging path 24 to the supply air path 21 in the supply air flow 56. In addition, since the second opening adjustment unit 129 is provided independently of the first opening adjustment unit 128, the vehicle air-conditioning ventilator 10 can individually adjust the flow rate of the outside air flowing from the outside air merging path 24 to the supply air path 21 regardless of the flow rate of the circulating inside air 92 flowing from the inside air merging path 23 to the supply air path 21.

In the vehicle air-conditioning ventilator 10 described above, the inside air merging path 23, a region of the exhaust air path 22 upstream of the heat recovery heat exchanger 2 where the storage batteries 102 are arranged, and a region downstream of the region where the storage batteries 102 are arranged are arranged in the underfloor region below the floor surface 104 in the inside of the vehicle. The region of the exhaust air path 22 upstream of the heat recovery heat exchanger 2 where the storage batteries 102 are arranged and the region downstream of the region where the storage batteries 102 are arranged are provided in a state where the inside air merging path 23 is interposed between the inside of the vehicle and the regions in an up-down direction.

That is, regarding the arrangement of the inside air exhaust path 22a and the inside air merging path 23 in the vehicle air-conditioning ventilator 10, the inside air exhaust path 22a, the inside air merging path 23, the floor surface 104 in the inside of the vehicle, and the inside of the vehicle are arranged in this order in the electrically powered vehicle 100 from bottom thereof. In addition, the inside air exhaust path 22a and the inside air merging path 23 are arranged in parallel in an overlapping state in a plane direction of the floor surface 104 in the inside of the vehicle. That is, the inside air merging path 23 is interposed between the inside air exhaust path 22a and the inside of the vehicle. As described above, in the vehicle air-conditioning ventilator 10, the inside air merging path 23 is disposed between the inside air exhaust path 22a in which the storage batteries 102 are arranged and the inside of the vehicle, so that heat generated by the storage batteries 102 is prevented from being directly transferred to the inside of the vehicle by heat conduction. As a result, in the vehicle air-conditioning ventilator 10, it is possible to prevent an increase in temperature in the vehicle caused by transfer of heat generated by the storage batteries 102 to the inside of the vehicle.

Furthermore, in the vehicle air-conditioning ventilator 10 described above, the outside air merging path 24 is closed, and the first opening adjustment unit 128 blocks the supply air path 21 while opening the inside air merging path 23, so that it is possible to perform air conditioning of the inside of the vehicle only by circulation of the inside air 86 with no supply air flow 56 passing through the heat recovery heat exchanger 2. As a result, it is possible to perform air conditioning of the inside of the vehicle by circulating the inside air 86 without generating a pressure loss of the supply air flow 56 caused by the supply air flow 56 passing through the heat recovery heat exchanger 2.

In addition, in the vehicle air-conditioning ventilator 10 described above, the air path of the exhaust inside air 91 that has cooled the storage batteries 102 does not change between a case where the heating operation is performed and a case where the cooling operation is performed. As a result, the position of the cooling blower 3 is not limited by the types of operation such as the heating operation and the cooling operation, and the cooling blower 3 can be arranged at any position in the exhaust air path 22, which results in a higher degree of freedom of the structure.

Consequently, the vehicle air-conditioning ventilator 10 according to the first embodiment achieves an effect that, even if gas is generated due to an anomaly of the storage batteries, the vehicle air conditioning ventilator can prevent the gas from flowing to the inside of the vehicle, while improving heating performance in the air conditioning of the inside of the vehicle using exhaust heat from the storage batteries, and preventing a decrease in the load in the cooling operation in the air conditioning of the inside of the vehicle due to exhaust heat from the storage batteries, with a simple structure thereof.

### Second Embodiment.

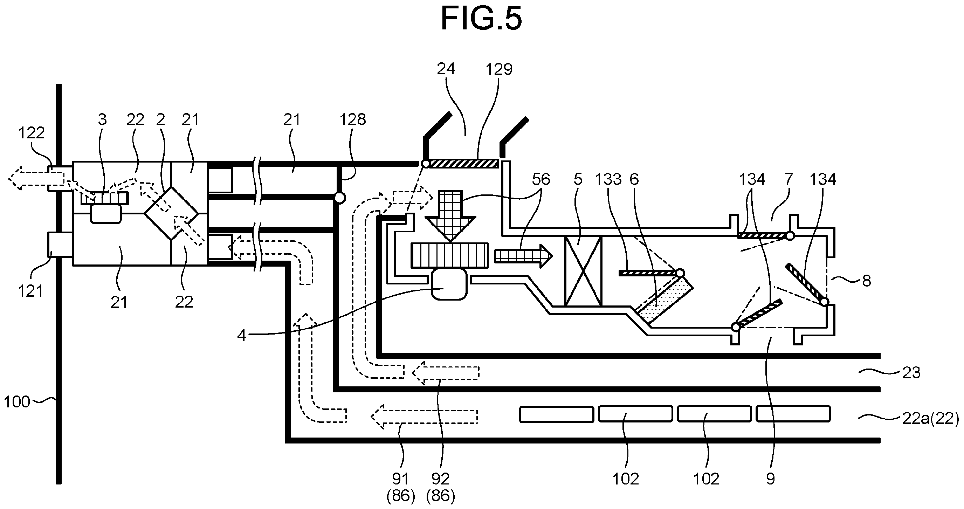

FIG. 5 is a diagram illustrating a schematic configuration of a vehicle air-conditioning ventilator 10a according to a second embodiment of the present invention. The vehicle air-conditioning ventilator 10a is different from the vehicle air-conditioning ventilator 10 according to the first embodiment described above in that the cooling blower 3 that generates a flow of the inside air 86 functioning as cooling air is provided at a position downstream of the heat recovery heat exchanger 2 in the exhaust air path 22.

The vehicle air-conditioning ventilator 10a achieves an effect similar to that of the vehicle air-conditioning ventilator 10 according to the first embodiment described above.

In addition, since the cooling blower 3 is provided at the position downstream of the heat recovery heat exchanger 2 in the exhaust air path 22, the vehicle air-conditioning ventilator 10a can reliably exhaust the exhaust air flow 57 to the outside of the vehicle even when there occurs disturbance to exhaust of the exhaust air flow 57 to the outside of the vehicle, such as disturbance in wind pressure of outside air at the external of the air exhaust vehicle exterior opening 122, i.e., the outside of the vehicle.

Note that FIG. 5 illustrates a case where the circulating inside air 92 is circulated in the vehicle and the exhaust inside air 91 is exhausted to the outside of the vehicle. The inside air merging path 23 and the inside air exhaust path 22a function independently.

### Third Embodiment.

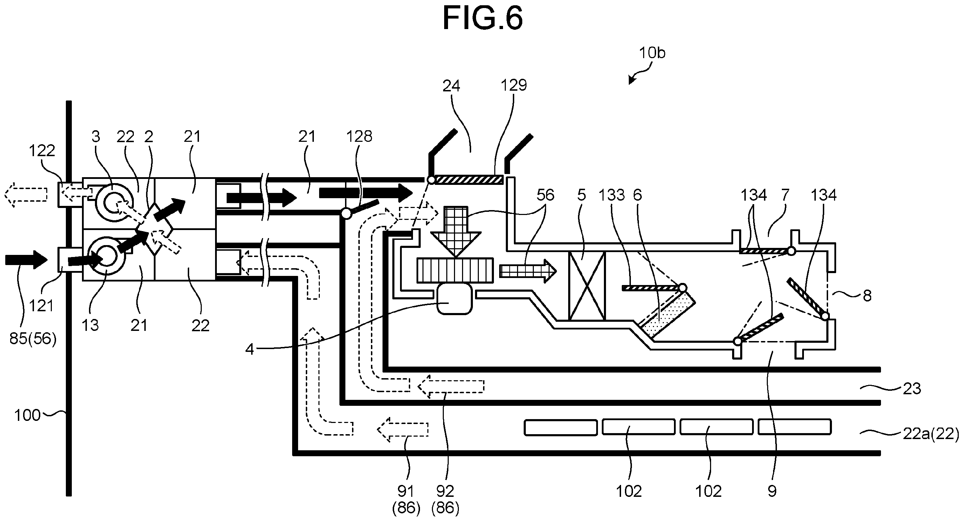

FIG. 6 is a diagram illustrating a schematic configuration of a vehicle air-conditioning ventilator 10b according to a third embodiment of the present invention. The vehicle air-conditioning ventilator 10b includes a second air supply blower 13 at a position upstream of the heat recovery heat exchanger 2 in the supply air path 21, in addition to the configuration of the vehicle air-conditioning ventilator 10a according to the second embodiment described above. The second air supply blower 13 generates, in the supply air path 21, the supply air flow 56 that flows from the air supply vehicle exterior opening 121 toward the defroster outlet port 7, the face outlet port 8, and the foot outlet port 9. That is, the vehicle air-conditioning ventilator 10b includes two air supply blowers.

The supply air path 21 in the vehicle air-conditioning ventilator 10b is a path passing through the air supply vehicle exterior opening 121, the second air supply blower 13, the heat recovery heat exchanger 2, the first air supply blower 4, the cooler 5, and the outlet ports. Note that the supply air path 21 may be a path passing through the heater 6 after passing through the cooler 5.

In the vehicle air-conditioning ventilator 10 according to the first embodiment and the vehicle air-conditioning ventilator 10a according to the second embodiment described above, the mixing ratio between the outside air and the circulating inside air 92 in the supply air flow 56 is controlled only by the first opening adjustment unit 128 adjusting the opening degree of the inside air merging path 23.

On the other hand, the vehicle air-conditioning ventilator 10b includes the second air supply blower 13, so that the flow rate of the outside air 85 taken into the supply air path 21 from the air supply vehicle exterior opening 121 is more easily adjusted, and the mixing ratio between the outside air and the circulating inside air 92 in the supply air flow 56 can be more finely controlled.

In addition, since the vehicle air-conditioning ventilator 10b includes the second air supply blower 13, the supply amount of the outside air 85 flowing through the heat recovery heat exchanger 2 is more easily adjusted, and a balance between the flow rates of the outside air 85 as the supply air flow 56 and the exhaust air flow 57 flowing through the heat recovery heat exchanger 2 is easily achieved.

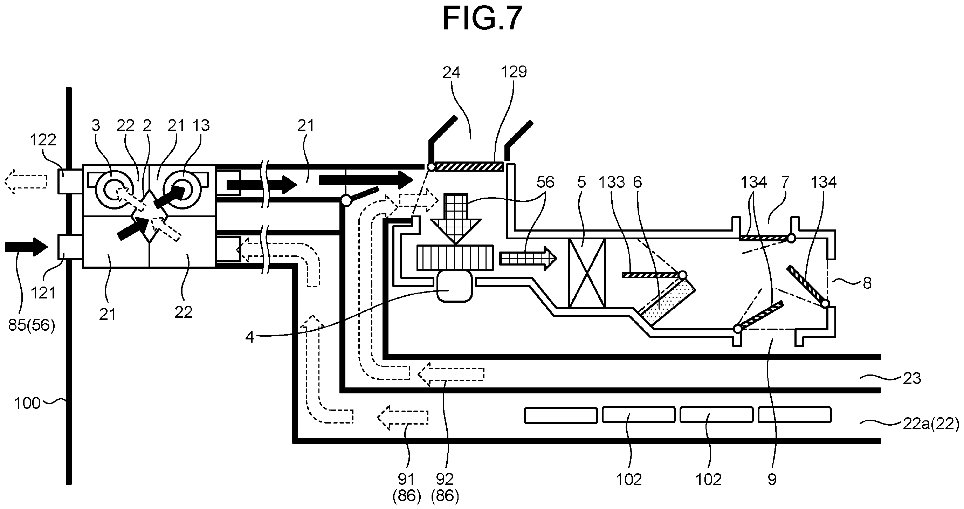

FIG. 7 is a diagram illustrating a schematic configuration of another vehicle air-conditioning ventilator 10c according to the third embodiment of the present invention. The vehicle air-conditioning ventilator 10c includes, in addition to the configuration of the vehicle air-conditioning ventilator 10a according to the second embodiment described above, the second air supply blower 13 at a position downstream of the heat recovery heat exchanger 2 in the supply air path 21 and upstream of the inside air merging path 23. That is, the vehicle air-conditioning ventilator 10c includes two air supply blowers.

The supply air path 21 in the another vehicle air-conditioning ventilator 10c is a path passing through the air supply vehicle exterior opening 121, the heat recovery heat exchanger 2, the second air supply blower 13, the first air supply blower 4, the cooler 5, and the outlet ports. Note that the supply air path 21 may be a path passing through the heater 6 after passing through the cooler 5.

As a result, since the another vehicle air-conditioning ventilator 10c includes the second air supply blower 13, the supply amount of the outside air 85 taken into the supply air path 21 from the air supply vehicle exterior opening 121 is more easily adjusted, and the mixing ratio between the outside air 85 and the circulating inside air 92 in the supply air flow 56 can be more finely controlled.

In addition, since the another vehicle air-conditioning ventilator 10c includes the second air supply blower 13, the supply amount of the outside air 85 flowing through the heat recovery heat exchanger 2 is more easily adjusted, and a balance between the flow rates of the outside air 85 as the supply air flow 56 and the exhaust air flow 57 flowing through the heat recovery heat exchanger 2 is easily achieved.

### Fourth Embodiment.

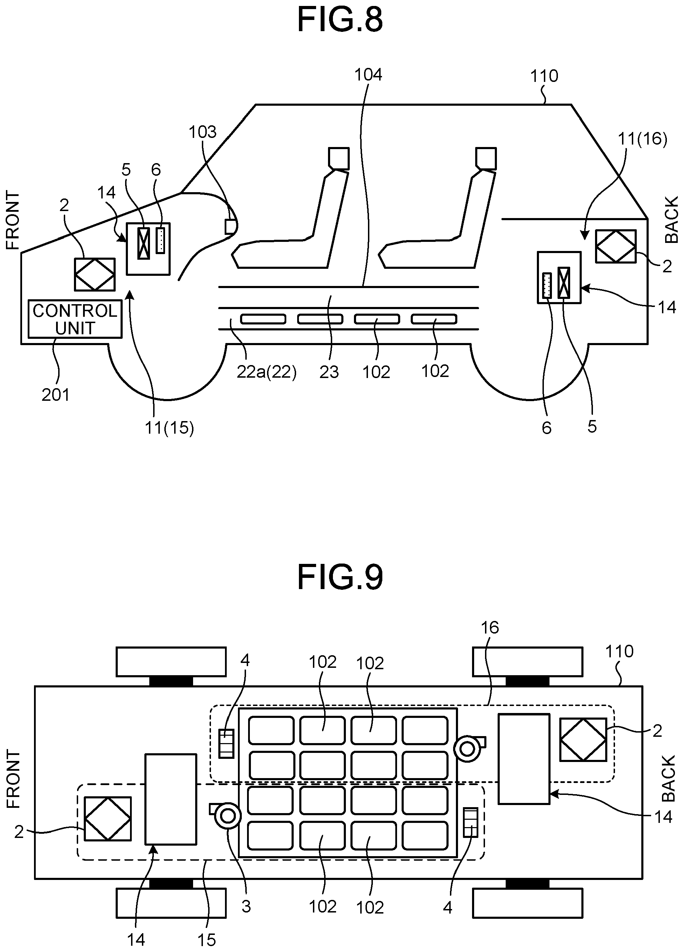

FIG. 8 is a diagram illustrating a schematic arrangement of main parts of vehicle air-conditioning ventilators in an electrically powered vehicle 110 according to a fourth embodiment of the present invention. FIG. 9 is a diagram illustrating a schematic arrangement of the vehicle air-conditioning ventilators in the electrically powered vehicle 110 according to the fourth embodiment of the present invention, and is a layout plan as viewed from a top-surface side of the electrically powered vehicle 110. In each of FIGS. 8 and 9, the illustration is focused on a positional relationship between the inside of the vehicle and the inside air exhaust path 22a and the inside air merging path 23, and the arrangement of the main body unit 11 in a first vehicle air-conditioning ventilator 15 and a second vehicle air-conditioning ventilator 16, and some components are omitted.

In the electrically powered vehicle 110 according to the fourth embodiment, there are arranged two sets of vehicle air-conditioning ventilators 10 including the first vehicle air-conditioning ventilator 15 which is the vehicle air-conditioning ventilator 10 described in the first embodiment and the second vehicle air-conditioning ventilator 16 which is the vehicle air-conditioning ventilator 10 described in the first embodiment. The main body unit 11 of the first vehicle air-conditioning ventilator 15 is arranged forward of the driver's seat of the electrically powered vehicle 110. The main body unit 11 of the second vehicle air-conditioning ventilator 16 is arranged behind the back seat of the electrically powered vehicle 110. The first vehicle air-conditioning ventilator 15 and the second vehicle air-conditioning ventilator 16 are independently arranged in equal regions divided into left and right in a width direction of the electrically powered vehicle 110.

In addition, the electrically powered vehicle 110 includes a plurality of storage batteries 102. The plurality of storage batteries 102 are aligned in parallel in an in-plane direction of the floor surface 104, in an array of four rows by four columns. The storage batteries 102 in two columns on the right side, which constitute part of the plurality of storage batteries 102 in the array of four rows by four columns, are arranged in the inside air exhaust path 22a at a position upstream of the heat recovery heat exchanger 2 in the exhaust air path 22 of the first vehicle air-conditioning ventilator 15. The storage batteries 102 in two columns on the left side, which constitute the rest of the plurality of storage batteries 102 in the array of four rows by four columns, are arranged in the inside air exhaust path 22a at a position upstream of the heat recovery heat exchanger 2 in the exhaust air path 22 of the second vehicle air-conditioning ventilator 16.

In the first vehicle air-conditioning ventilator 15, the inside air 86 is taken in from the air inlet port 101 (not illustrated) provided at a posterior portion in the vehicle, and air of a supply air flow is blown to the inside of the vehicle from an outlet port (not illustrated) provided at a posterior portion in the vehicle. In the second vehicle air-conditioning ventilator 16, the inside air 86 is taken in from the air inlet port 101 (not illustrated) provided at an anterior portion in the vehicle, and air of a supply air flow is blown to the inside of the vehicle from an outlet port (not illustrated) provided at an anterior portion in the vehicle.

Since the electrically powered vehicle 110 includes the first vehicle air-conditioning ventilator 15 and the second vehicle air-conditioning ventilator 16 described above, the exhaust heat from the plurality of storage batteries 102 can be distributed to the first vehicle air-conditioning ventilator 15 and the second vehicle air-conditioning ventilator 16, then recovered to be used for increasing the temperature of the supply air flow 56, and further exhausted to the outside of the vehicle.

Note that regarding the distribution of the exhaust heat from the plurality of storage batteries 102 to be used between the first vehicle air-conditioning ventilator 15 and the second vehicle air-conditioning ventilator 16, there is no limitation to the width direction of the electrically powered vehicle 110. Regarding the distribution of the exhaust heat from the plurality of storage batteries 102 to be used, division in an anteroposterior direction of the electrically powered vehicle 110 may be performed depending on the distribution of an exhaust heat amount from the plurality of storage batteries 102. Furthermore, regarding the distribution of the exhaust heat from the plurality of storage batteries 102 to be used, division is not only performed equally in the width direction of the electrically powered vehicle 110 or the anteroposterior direction of the electrically powered vehicle 110, but also performed by changing the ratio of the division depending on the capability of the main body unit 11 of the first vehicle air-conditioning ventilator 15 and that of the second vehicle air-conditioning ventilator 16.

The configuration according to the fourth embodiment in which the multiple vehicle air-conditioning ventilators 10 are arranged is particularly useful for a minicoach and a large-sized automobile having a riding capacity of 11 or more people. In addition, large buses having a riding capacity of 30 or more people have a total length of over 10 meters. By arranging the main body unit 11 including the air-conditioning unit 14 in both of an anterior portion and a posterior portion of a large bus vehicle and performing air conditioning of the inside of the vehicle from anterior and posterior directions of the vehicle, air conditioning of the entire inside of the vehicle can be performed even in a long vehicle having a total length of over 10 meters.

Note that the case has been described in the above where the electrically powered vehicle 110 includes two sets of the vehicle air-conditioning ventilators 10 in which the air-conditioning units 14 are arranged, in the electrically powered vehicle 110, forward of the driver's seat of the electrically powered vehicle 110 and behind the back seat thereof. However, the electrically powered vehicle 110 may include two sets of vehicle air-conditioning ventilators, which are any of the vehicle air-conditioning ventilators 10a, the vehicle air-conditioning ventilators 10b, and the vehicle air-conditioning ventilators 10c. In addition, the electrically powered vehicle 110 may include two sets of vehicle air-conditioning ventilators different from each other among the vehicle air-conditioning ventilator 10, the vehicle air-conditioning ventilator 10a, the vehicle air-conditioning ventilator 10b, and the vehicle air-conditioning ventilator 10c. In addition, the electrically powered vehicle 110 may include more than two sets of vehicle air-conditioning ventilators.

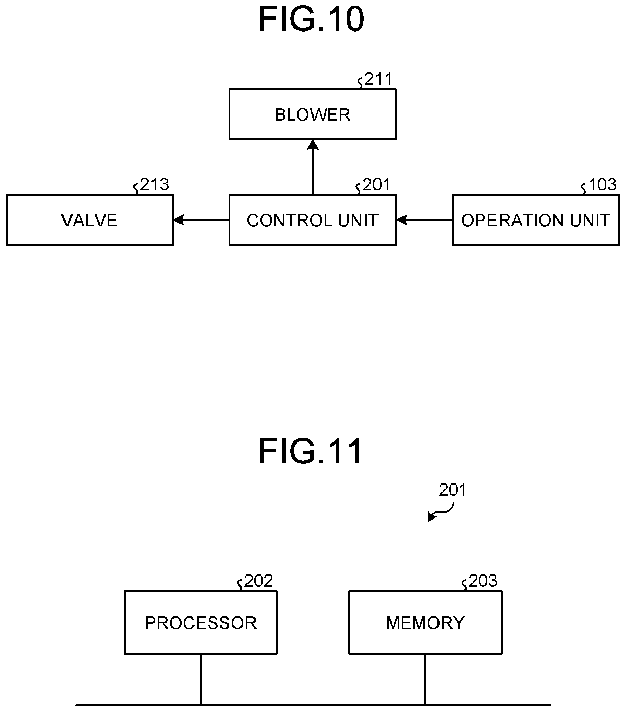

FIG. 10 is a block diagram illustrating the control unit 201 and the like illustrated in FIG. 1. On the basis of information about an operation instruction input from the operation unit 103, the control unit 201 controls operations of a blower 211 and a valve 213 so as to realize an operation and an operation mode designated by the operation instruction. Note that the blower 211 is a general term for various blowers installed on the vehicle air-conditioning ventilator 10. The valve 213 is a general term for an opening adjustment unit and the like which are installed on the vehicle air-conditioning ventilator 10 and have a valve function of performing switching between opening and closing of various air paths and adjusting the opening degrees thereof.

FIG. 11 is a diagram illustrating a hardware configuration of the control unit 201 illustrated in FIG. 1. The control unit 201 includes a processor 202 and a memory 203. The processor 202 and the memory 203 can transmit and receive data to and from each other via a bus, for example. The processor 202 executes a function of controlling operations of the blower 211 and the valve 213 by reading out and executing programs stored in the memory 203. The processor 202 is an example of processing circuitry, and includes one or more of a CPU, a digital signal processer (DSP), and system large scale integration (LSI), for example.

The memory 203 includes one or more of a random access memory (RAM), a read only memory (ROM), a flash memory, an erasable programmable read only memory (EPROM), and an electrically erasable programmable read only memory (EEPROM (registered trademark)). In addition, the memory 203 includes a recording medium in which a computer-readable program is recorded. Such a recording medium includes one or more of a nonvolatile or volatile semiconductor memory, a magnetic disk, a flexible memory, an optical disk, a compact disc, and a digital versatile disc (DVD).

The configurations described in each embodiment above are merely examples of the content of the present invention. The technologies of the embodiments can be combined with each other, can be combined with other known technology, and part of the configurations can be omitted or modified without departing from the gist of the present invention.

### Reference Signs List

2 heat recovery heat exchanger; 3 cooling blower; 4 first air supply blower; 5 cooler; 6 heater; 7 defroster outlet port; 8 face outlet port; 9 foot outlet port; 10, 10a, 10b, 10c vehicle air-conditioning ventilator; 11 main body unit; 12 inside air path; 13 second air supply blower; 14 air-conditioning unit; 15 first vehicle air-conditioning ventilator; 16 second vehicle air-conditioning ventilator; 21 supply air path; 22 exhaust air path; 22a inside air exhaust path; 23 inside air merging path; 24 outside air merging path; 51 partition member; 52 spacing member; 54 first laminar gas flow path; 55 second laminar gas flow path; 56 supply air flow; 57 exhaust air flow; 85 outside air; 86 inside air; 91 exhausted inside air; 92 circulated inside air; 100, 110 electrically powered vehicle; 101 air inlet port; 102 storage battery; 103 operation unit; 104 floor surface; 121 air supply vehicle exterior opening; 122 air exhaust vehicle exterior opening; 125 merging vehicle exterior opening; 128 first opening adjustment unit; 129 second opening adjustment unit; 131 air supply opening/closing unit; 132 air exhaust opening/closing unit; 133 flow rate adjustment unit; 134 blow-out amount adjustment unit; 201 control unit; 202 processor; 203 memory; 207 blower; 209 valve.

## Claims

1. A vehicle air-conditioning ventilator provided in a vehicle, comprising:
a supply air path connecting outside of the vehicle that is external of the vehicle and inside of the vehicle that is internal of the vehicle;
an exhaust air path connecting the outside of the vehicle and the inside of the vehicle and intersecting with the supply air path;
a first air supply blower provided in the supply air path to generate, in the supply air path, a supply air flow toward the inside of the vehicle;
an exhaust air blower provided in the exhaust air path to generate, in the exhaust air path, an exhaust air flow that flows from the inside of the vehicle toward the outside of the vehicle;
a heat exchanger to perform heat exchange between the supply air flow and the exhaust air flow;
a storage battery arranged at a position upstream of the heat exchanger in the exhaust air path and used for driving the vehicle; and
an inside air merging path merging with the supply air path at a position downstream of the heat exchanger and connecting the supply air path and the inside of the vehicle.

2. The vehicle air-conditioning ventilator according to claim 1, comprising:
a first opening adjustment unit to adjust an opening degree of the inside air merging path.

3. The vehicle air-conditioning ventilator according to claim 1 or 2, wherein
the first air supply blower is provided at a position downstream of a junction with the inside air merging path in the supply air path.

4. The vehicle air-conditioning ventilator according to any one of claims 1 to 3, comprising:
an outside air merging path merging with the supply air path at a position downstream of the heat exchanger and connecting the supply air path and the outside of the vehicle.

5. The vehicle air-conditioning ventilator according to claim 4, comprising:
a second opening adjustment unit to adjust an opening degree of the outside air merging path.

6. The vehicle air-conditioning ventilator according to any one of claims 1 to 5, wherein
the inside air merging path and a region of the exhaust air path upstream of the heat exchanger where the storage battery is arranged are arranged in an underfloor region below a floor surface in the inside of the vehicle, and
the region of the exhaust air path upstream of the heat exchanger where the storage battery is arranged is provided in a state where the inside air merging path is interposed between the inside of the vehicle and the region in an up-down direction.

7. The vehicle air-conditioning ventilator according to any one of claims 1 to 6, comprising:
a second air supply blower provided at a position upstream of the heat exchanger in the supply air path to generate, in the supply air path, the supply air flow toward the inside of the vehicle.

8. The vehicle air-conditioning ventilator according to any one of claims 1 to 6, comprising:
a second air supply blower provided at a position downstream of the heat exchanger in the supply air path and upstream of the inside air merging path to generate, in the supply air path, the supply air flow toward the inside of the vehicle.

9. The vehicle air-conditioning ventilator according to any one of claims 1 to 8, wherein
the exhaust air blower is provided at a position upstream of the heat exchanger in the exhaust air path.

10. The vehicle air-conditioning ventilator according to any one of claims 1 to 8, wherein
the exhaust air blower is provided at a position downstream of the heat exchanger in the exhaust air path.

11. The vehicle air-conditioning ventilator according to any one of claims 1 to 10, comprising:
an air-conditioning unit including
a cooler provided at a position downstream of the first air supply blower in the supply air path to cool the supply air flow, and
a heater provided at a position downstream of the cooler in the supply air path to heat the supply air flow,
the air-conditioning unit performing air conditioning of the supply air flow.

12. A vehicle comprising:
a first vehicle air-conditioning ventilator that is the vehicle air-conditioning ventilator according to claim 11 in which the air-conditioning unit is arranged forward of a driver's seat; and
a second vehicle air-conditioning ventilator that is the vehicle air-conditioning ventilator according to claim 11 in which the air-conditioning unit is arranged behind a back seat.

13. The vehicle according to claim 12, comprising:
a plurality of the storage batteries, wherein
part of the plurality of storage batteries is arranged at a position upstream of the heat exchanger in the exhaust air path of the first vehicle air-conditioning ventilator, and
rest of the plurality of storage batteries is arranged at a position upstream of the heat exchanger in the exhaust air path of the second vehicle air-conditioning ventilator.
